# EUROPEAN PATENT SPECIFICATION

(11) **EP 4 042 636 B1**
(45) Date of publication and mention of the grant of the patent: **30.08.2023**
(21) Application number: 20771904.8
(22) Date of filing: 21.09.2020
(51) Int. Cl.: H04L 41/16

(54) **ORCHESTRATING SANDBOXING OF COGNITIVE NETWORK MANAGEMENT FUNCTIONS**
ORCHESTRIERUNG VON SANDBOXING KOGNITIVER NETZWERKVERWALTUNGSFUNKTIONEN
ORCHESTRATION DE BAC À SABLE DE FONCTIONS DE GESTION DE RÉSEAU COGNITIVES

(30) Priority: 10.10.2019 EP 19202386
(43) Date of publication of application: 17.08.2022
(73) Proprietor: Nokia Solutions and Networks Oy, 02610 Espoo (FI)
(72) Inventor: MWANJE, Stephen, 84405 Dorfen (DE); ALI-TOLPPA, Janne Tapio, 82024 Taufkirchen (DE)
(74) Representative: Nokia EPO representatives
(86) International application number: PCT/EP2020/076245
(87) International publication number: WO 2021/069196

(56) References cited:
- WO-A1-2018/042232
- US-A1- 2018 082 189
- MWANJE STEPHEN S ET AL: "TOWARDS COGNITIVE AUTONOMOUS NETWORKS IN 5G", 2018 ITU KALEIDOSCOPE: MACHINE LEARNING FOR A 5G FUTURE (ITU K), ITU, 26 November 2018 (2018-11-26), pages 1-8, XP033490480, DOI: 10.23919/ITU-WT.2018.8597732 [retrieved on 2018-12-31]
- RAVICHANDRAN RAMYA ET AL: "Mechanism of dynamic, impact-aware and context-aware orchestration of cognitive functions in 5G networks", 2018 IEEE INTERNATIONAL CONFERENCE ON ADVANCED NETWORKS AND TELECOMMUNICATIONS SYSTEMS (ANTS), IEEE, 16 December 2018 (2018-12-16), pages 1-6, XP033547123, DOI: 10.1109/ANTS.2018.8710053 [retrieved on 2019-05-08]

## Description

### Technical Field

Various example embodiments relate to apparatuses, methods, systems, computer programs, computer program products and computer-readable media regarding orchestrating sandboxing of cognitive network management functions.

### Abbreviations and Definitions:

- 3CF: Configuration, Control, and Coordination Function
- AI: Artificial Intelligence
- CAN: Cognitive Autonomous Network
- CF: Cognitive Function
- CNM: Cognitive Network Management
- ML: Machine Learning
- MLB: Mobility Load Balancing
- MLFO: Machine Learning Function Orchestrator
- MRO: Mobility Robustness Optimization
- NMA: Network Management Automation
- OAM: Operations, Administration and Management
- KPI: Key Performance Indicator
- SON: Self-Organizing Networks

### Background

The present invention relates to Cognitive Autonomous Networks (CAN) in 5G (radio access) networks and other (future) generations of wireless/mobile networks. As a paradigm for intelligent autonomy in networks, CAN will ensure that Operations, Administration and Management (OAM) functions shall be able to:
1) take higher level goals and derive the appropriate performance targets,
2) learn from their environment and their individual or shared experiences therein,
3) learn to contextualize their operating conditions, and
4) learn their optimal behavior fitting to the specific environment and contexts.

The function to undertake the intelligent decision will typically be developed and trained by the vendors away from the operator's productive networks. And, as learning functions, there will not be written descriptions of how the functions achieve their outcomes, which makes operators unwilling to accept them simply on the vendor's word. For this purpose, NMA systems require a mechanism for sandboxing the functions and orchestrating the build-up of trust of the functions using the sandbox environment. The sandboxing environments may also be used for reinforcement training of CAN functions. The present invention proposes the system, apparatus and methods for building the sandboxing and orchestrating its use for a given function.

Cognitive Functions (CFs) that rely on online learning, especially on reinforcement learning, need a non-intrusive environment for the training process. Such environment could be an emulator, a simulator, a test network or a real network under specified conditions. The resources need to be reserved and configured for the particular use case, which can be a complicated task.

CFs also typically come from different vendors with different design philosophies and different AI/ML algorithms used for learning how to behave on a given network. The functions may need to be trained to the local context before they can be activated in the network. Additionally, machine learning adds an aspect of unpredictability in the functions and even the vendors of the CFs may not always be able to predict how they will perform in all possible contexts where they may be deployed. Instead, the functions will typically be trained offline (in the case of supervised learning-based functions) or may require a training environment from where to safely learn (the case for reinforcement learning based functions).

As such, before deploying a function on the real network, the CAN system needs a safe way to train the CFs to the local context and a mechanism to ensure that the function does exactly what has been promised, i.e. the system needs a sandbox environment in which the function may be executed in a way that the cost of unwanted decisions is minimized. Moreover, the CAN system needs to orchestrate the execution of the CF to determine when to be executed on a sandbox, which particular sandbox is appropriate and when to be executed on the real system.

Currently, no proposal has been made related to orchestrating the sandboxing of CFs.

Documents WO 2018/042 232 A1 and US 2018/082 189 A1 disclose methods for verifying operation of a plurality of cognitive functions.

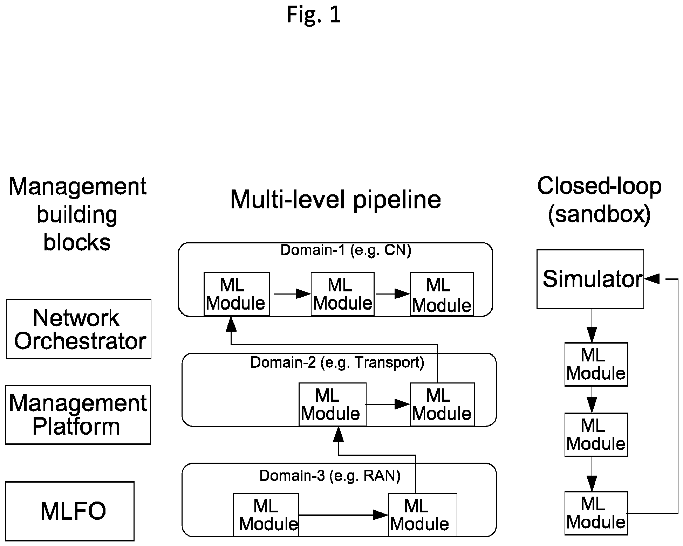

In SON, the functions were hand engineered and the system designers could explain how a function worked in general even though they were never sure of how it would work in the target environment. In that respect, they found no need for sandboxing but instead the developers made the functions extremely configurable. Finding the right configuration for the functions was then part of the deployment process of the SON solution, a kind of a manual "learning" process. The ITU-T Focus Group on Machine Learning for Future Networks including 5G (FG-ML5G) defines a reference architecture for a Machine Learning (ML) friendly mobile network architecture in the technical specification for "Unified architecture for machine learning in 5G and future networks". Fig. 1 illustrates the unified logical architecture. It defines ML pipelines, which consist of chained services that collect and process analytics data, build ML models on it and provide insights or trigger optimization actions. These ML pipelines and their Cloud-native Network Functions (CNFs) are orchestrated by a Machine Learning Function Orchestrator (MLFO). The MLFO is responsible for setting up the required ML pipelines and for their life-cycle management, meaning the service chain composition and deployment. The pipelines may span over several domains and planes in the network.

The model also defines a sandboxing environment for training the closed-loop automation functions. However, it does not provide a solution for how to orchestrate the sandboxing resources to the learning functions. The MLFO, for example, can only instantiate and deploy the ML-pipelines, but is not able to control and distribute the resources of the sandbox environments.

Thus, the present invention has been made to propose a solution that ensures to build the required trust in the functions.

### Summary

It is an object of various example embodiments to improve the prior art and to provide apparatuses, methods, systems, computer programs, computer program products and computer-readable media regarding orchestrating sandboxing of cognitive network management functions.

According to an aspect of various example embodiments there is provided a method for use in a management entity of a communication network, as defined according to the appended independent claim 1.

According to another aspect of various example embodiments there is provided an apparatus for use in a management entity of a communication network, as defined according to the appended independent claim 6.

According to another aspect of the present invention there is provided a computer program product comprising code means adapted to produce steps of any of the methods as described above when loaded into the memory of a computer, as defined according to the appended independent claim 11.

Further aspects and features of the present invention are set out in the dependent claims.

### Brief Description of the Drawings

These and other objects, features, details and advantages will become more fully apparent from the following detailed description of various aspects/embodiments which is to be taken in conjunction with the appended drawings, in which:
Fig. 1 is an overview illustrating the unified logical architecture as defined by ITU;
Fig. 2 is an overview illustrating an example of a CAN system according to certain embodiments of the present invention;
Figs. 3(a) and 3(b) are overviews illustrating other examples of a CAN system according to certain embodiments of the present invention;
Fig. 4 is a signaling diagram illustrating an example of an end-to-end sandboxing orchestration process according to certain embodiments of the present invention;
Fig. 5 is a flowchart illustrating an example of a method according to certain embodiments of the present invention.
Fig. 6 is a block diagram illustrating an example of an apparatus according to certain embodiments of the present invention.

### Detailed Description

The present disclosure is described herein with reference to particular non-limiting examples and to what are presently considered to be conceivable embodiments. A person skilled in the art will appreciate that the present disclosure is by no means limited to these examples and embodiments, and may be more broadly applied.

In the following, some example versions of the disclosure and embodiments are described with reference to the drawings. For illustrating the various embodiments, the examples and embodiments will be described in connection with a cellular communication network based on a 3GPP based communication system, for example, a 5G/NR system or the like. As such, the description of example embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as it complies with what is described herein and/or example embodiments described herein are applicable to it. Further, it is to be noted that the various embodiments are not limited to an application using such types of communication systems or communication networks, but is also applicable in other types of communication systems or communication networks.

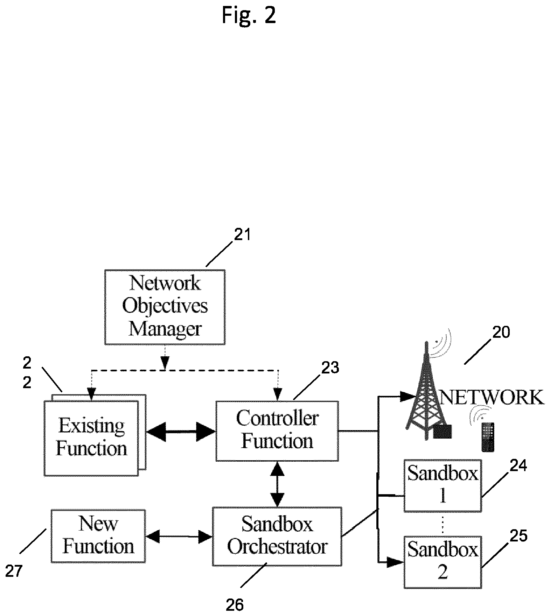

Certain aspects of the present invention propose a system, apparatus and method for Sandbox Orchestration Function(ality) (SOF) (or simply the sandbox orchestrator) and its relationship with the CAN Controller function, as illustrated by Fig. 2.

Fig. 2 illustrates an example of a CAN system including a network objectives manager 21 that sets the technical objectives that are expected to be achieved by the system and provides this to the existing cognitive function(s) (CF) 22 and the controller function 23. Fig. 2 further illustrates sandboxes 24 and 25, a sandbox orchestrator or SOF 26 and a new cognitive function (CF) 27 and the network 20.

According to certain aspects of the present invention, the following is proposed:
- The CAN system may have resources for multiple sandboxes 24, 25 to be used depending on need. These may include simulation environments, emulators, a digital twin of the network, a test network or a selected set of UEs for sandboxing purposes in the live network.
- Sandboxing involves choosing the right type and instance of a sandbox to which the action of a CF may be tested depending on the needs of the function to be tested and the available sandbox resources.
- Sandboxing may also involve executing the action in the real network but in a controlled fashion, e.g., only within certain hours or only on cells with a particular kind of load or only on cells in a particular area or in limited subscriber groups.

Furthermore, for a given new CF, the actions taken by the SOF 26 may include:
- Control the allowed parameter space/ranges of the parameters optimized by the CF depending on the environment to which the parameters are being deployed
- Adjust the parameter space in consideration of the observed behavior of the CFs.
- Deploy the CFs actions to a selected sandbox or to the real network
- Block the function from being used in the network.

Certain aspects of the present invention refer to network analysis, more particularly to automatic (machine learning - ML) network analysis. In ITU specific "ML modules" (or cognitive functions - CF, as referred to in the present specification) are defined that get information from different locations/points/functions ("sources") within the network, that analyze the received information, that conclude from the information on network "behavior", and that can even react based on the conclusion, i.e. that can perform actions that affect the network behavior in a certain way.

The overall architecture has already been defined in ITU, as set out above. However, there is a requirement that all new (untrusted, untrained) ML modules/CF modules cannot be directly used in the working environment, but may have to be installed in a "sandbox" domain first. This means, an untrusted or untrained CF module may be installed (setup) in an isolated domain where the CF module may, for example, already get data from its sources, but where its potential actions are not yet impacting the network (the actions may e.g. be sent to a simulator).

According to certain aspects of the present invention, there is proposed a concept how the "sandbox" requirement is fulfilled in a communication network. It is proposed that an additional function ("sandbox orchestration function" - SOF) is installed that will "orchestrate the sandboxing resources to the learning functions".

More specifically, the SOF supervises all available sandboxes (and may even instantiate new sandboxes) and will have an interface with all (new) CF modules. The SOF may for example choose the right sandbox for a CF module and it may also allow executing an action, for example "in a controlled fashion, e.g., only within certain hours or only on cells with a particular kind of load or only on cells in a particular area or in limited subscriber groups".

In other words, the newly proposed SOF automatically handles the usage of the sandboxes and assigns all CF modules to the sandboxes.

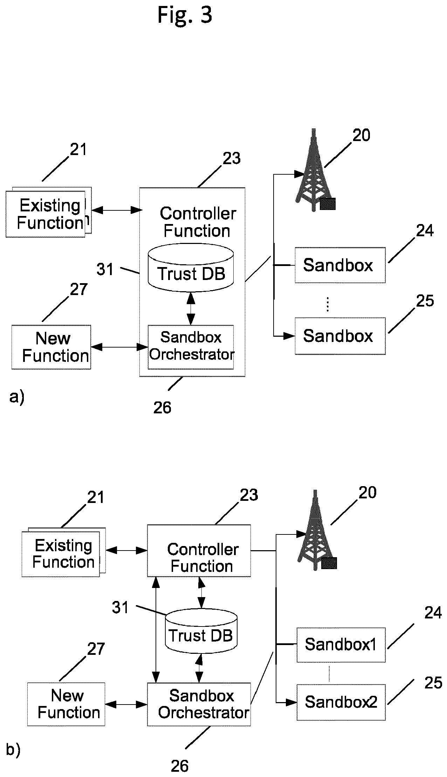

Trust and state database:
Each Function is identified by a trust level field and the SOF has a trust and state database 31 where the trust levels of the different functions are tracked. Both the SOF 26 and the trust database 31 may either be implemented as part of the controller function 23, as illustrated in Fig. 3(a) or may be separate from the controller function 23 with an exposed interface between the two, as illustrated in Figs. 2 and 3(b).

Trust levels:
The trust levels may include for example, but are not limited to: Level 3 trust - the function itself is trusted, all recommendations from the function are trusted.

A function is trusted if it has had multiple successful actions, i.e. it has taken multiple actions that have (either all or to a large extent) had positive outcomes (in different states/conditions). Any action proposed by the function is executed on the network without testing.

Level 2 trust - the function is trusted for specific actions.

A function is trusted with a particular action if it has previously taken that action on the real network with positive outcomes. The action can be executed on the network without extra testing.

Level 1 trust -specific actions from the function may be tried on the real network. A particular action the function has previously tried in the sandbox with positive outcomes. The action can be executed on the network in controlled fashion, e.g. its performance needs to be evaluated in different conditions.

Level 0 trust - no recommendation from the function is trusted.

All actions or recommendations from a function are not trusted, any action must be tested in the lowest possible sandbox - e.g. a simulator or emulator.

Updating of the trust level:
Trust promotion:
The trust levels field of the functions are promoted when specific conditions are fulfilled. The promotions may include as an example and not limited to:
a) Promotion to level 1
   The action has been tested in (all) the offline sandbox(es) with acceptable performance. Extra rules may be provided here, e.g. that before it is promoted, the action needs to be tested at least n times with m of the n times being successful or having acceptable performance.
b) Promotion to level 2
   The action has been tested on the real network with acceptable performance. Again, a rule may be provided that the action is promoted if it has been tested at least n times with m of the n times being successful or having acceptable performance. Similarly, the success may be constrained to multiple conditions, i.e. that the n trials must be in at least p distinct conditions or states.
c) Promotion to level 3
   Multiple actions proposed by the function have been successfully promoted to level 2 trust. The operator may define how many or what proportion of those actions need to have been promoted to level 2.

Trust demotion:
In a similar manner as set out above with respect to the trust promotion, there may be also criteria for trust demotion, i.e. reducing the trust level, in case the actions of a trusted function are repeatedly causing performance degradations, i.e. the function is "misbehaving". The other reason for this may be a change in the context, i.e. updates in the network, which require re-evaluation of the trust levels.

Interfaces:
a) To the new CF
   The new CF 27 implements all the interfaces implemented by the existing functions 22 to allow it to use the services of and provide services to the controller function 23. Moreover, it implements an interface to the SOF 26, which in the case of Figure 3 (b) is an extension of the controller to CF interface. Through this new interface, the CF may be informed of its trust level and configured for the appropriate sandbox.
b) To the controller
   In the case where the SOF 26 is implemented outside the controller 23, the two must implement an interface between them. Through this interface, the controller triggers the SOF 26 to sandbox a new function 27 and the SOF 26 reports to the controller 23 about the sandbox outcomes.
c) To the sandboxes
   Each sandbox 24, 25 implements an interface to the SOF 26 through which actions, which also may include configuration of the sandbox for a given use case that is being tested, may be deployed for execution and performance metrics may be reported to the SOF 26. The sandbox interface implements the typical CM and PM services that would also be expected for the real network.

Setting up sandboxes:
The SOF 26 generally assumes that sandboxes have been set-up and are available for use to train and or test the CFs. In some instances, however, the SOF 26 may also set up the sandboxes either by directly stitching together the required functions or by using the services of another function, like a machine learning pipeline orchestrator to set up the machine learning pipeline that can thereafter be used as a sandbox. The machine learning pipeline orchestrator may also be responsible for maintaining the machine learning pipeline for a specific sandbox as directed by the SOF 26. For example, if the SOF 26 declares a pipeline as unnecessary, it may trigger the machine learning pipeline orchestrator to terminate that pipeline.

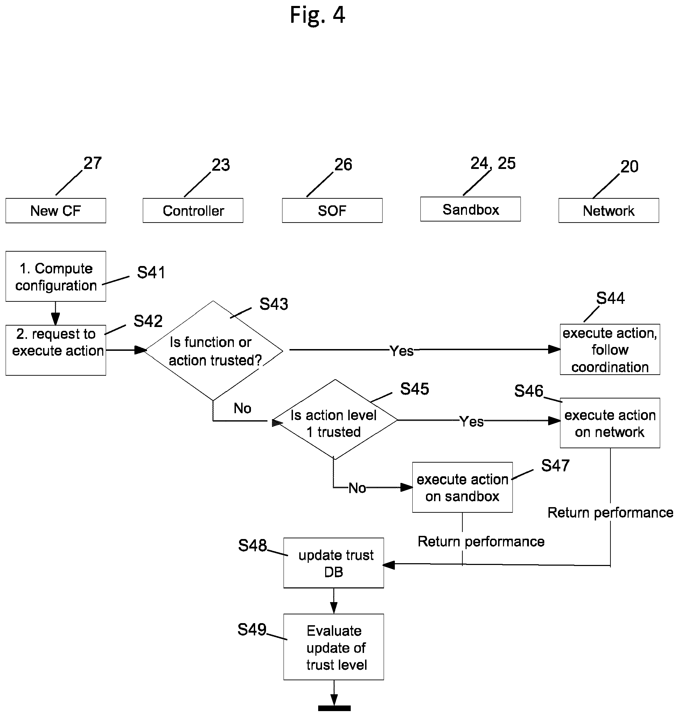

End-to-End orchestration:
The method of the end-to-end orchestration is represented by Fig. 4, where the new functions are indicated by dashed lines. Given a computed configuration and request by the new function 27 to execute the action, the controller 23 needs to check if the function is trusted, in which case it can be executed on the network. A specific action of a function is also executed on the network if the action is trusted even if the function as a whole is not trusted.

In all other cases, the function (the proposed action thereof) is executed in a sandbox 24, 25 selected for the prevailing context and conditions. After execution, both the sandbox 24, 25 and the real network 20 may return some feedback to the SOF 26 which feedback is used to promote the functions and actions thereof.

Fig. 4 illustrates an example of an end-to-end sandboxing orchestration process according to certain embodiments of the present invention.

As shown in Fig. 1, the new CF 27 computes a configuration in step S41 and requests execution of an action in step S42. Then, in step S43, the controller 23 determines whether the function or action to be executed is trusted, i.e. whether the trust level fulfills a first predetermined trust level. In the example illustrated in Fig. 4, it is determined whether the trust level of the action fulfills the trust level 2 or more. If it is determined that the trust level fulfills trust level 2 or more (Yes in S43), the action is executed on the real network 20, in step S44.

Otherwise, if it is determined that the trust level does not fulfill the first predetermined trust level, i.e. trust level 2 or more, it is determined in step S45 whether the trust level fulfills a second predetermined trust level, i.e. trust level 1 in the present example. If it is determined that the trust level fulfills trust level 1 (Yes in S45), the action is executed in step S46on the real network 20 in a controlled fashion, i.e. under specific conditions only, like within certain hours, on cells of the communication network with a particular kind of load, on cells in a particular area, and/or in limited subscribed groups.

If it is determined in step S45 that the trust level is lower than the second predetermined trust level, then the action is executed in a sandbox in step S47, which is selected based on the right type and instance of a sandbox to which the action of a CF may be tested depending on the needs of the function to be tested and the available sandbox resources.

Further, when executing the action on the network under specific conditions or on the sandbox, information regarding the performance of the actions are returned to the SOF 26, which then updates the trust level accordingly in step S48 based on the information and evaluates update, i.e. promotion or demotion, of the trust level in step S49.

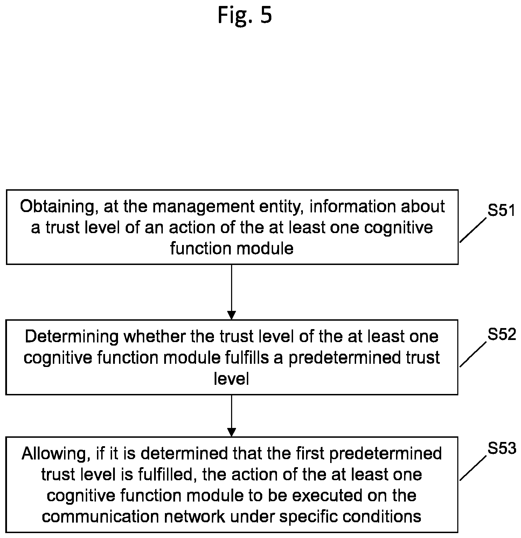

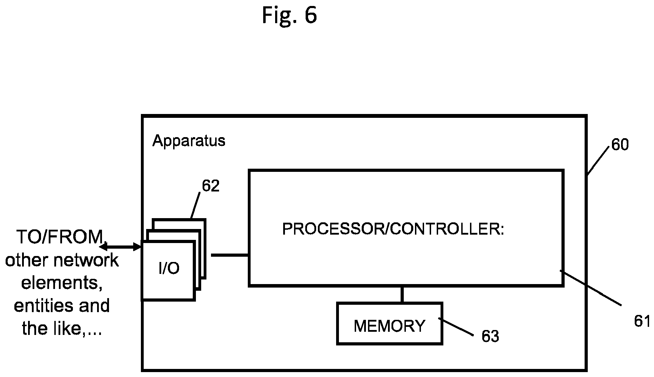

In the following, a more general description of example versions of the present invention is made with respect to Figs. 5 and 6.

Fig. 5 is a flowchart illustrating an example of a method according to some example versions of the present invention.

According to example versions of the present invention, the method may be implemented in or may be part of a management entity, like a Sandbox Orchestration Function(ality), SOF, or the like, of a communication network, the management entity having an interface to at least one cognitive function module. The method comprises obtaining, in step S51, at the management entity, information about a trust level of an action of the at least one cognitive function module, determining, in step S52, whether the trust level of the at least one cognitive function module fulfills a predetermined trust level, and if it is determined that the first predetermined trust level is fulfilled, allowing, in step S53, the action of the at least one cognitive function module to be executed on the communication network under specific conditions.

According to some example versions of the present invention, the method further comprises selecting, if it is determined that the predetermined trust level is not fulfilled, a sandbox on which the action of the at least one cognitive function module is to be executed, and executing the action of the at least one cognitive function module on the selected sandbox.

According to some example versions of the present invention, the method further comprises obtaining performance information regarding the execution of the action of the at least one cognitive function module on the network under specific conditions or on the sandbox, and updating the trust level of the action of the at least one cognitive function module based on the obtained information.

According to some example versions of the present invention, executing the action of the at least one cognitive function module on the communication network under specific conditions means one or more of the following:
- executing only within certain hours;
- executing only on cells of the communication network with a particular kind of load;
- executing only on cells in a particular area; and
- executing in limited subscribed groups.

According to some example versions of the present invention, the sandbox is selected and configured based on the type and instance of the sandbox depending on the need of the action to be executed and available sandbox resources.

Fig. 6 is a block diagram illustrating an example of an apparatus according to some example versions of the present invention.

In Fig. 6, a block circuit diagram illustrating a configuration of an apparatus 60 is shown, which is configured to implement the above described various aspects of the invention. It is to be noted that the apparatus 60 shown in Fig. 6 may comprise several further elements or functions besides those described herein below, which are omitted herein for the sake of simplicity as they are not essential for understanding the invention. Furthermore, the apparatus may be also another device having a similar function, such as a chipset, a chip, a module etc., which can also be part of an apparatus or attached as a separate element to the apparatus, or the like.

The apparatus 60 may comprise a processing function or processor 61, such as a CPU or the like, which executes instructions given by programs or the like. The processor 61 may comprise one or more processing portions dedicated to specific processing as described below, or the processing may be run in a single processor. Portions for executing such specific processing may be also provided as discrete elements or within one or further processors or processing portions, such as in one physical processor like a CPU or in several physical entities, for example. Reference sign 62 denotes transceiver or input/output (I/O) units (interfaces) connected to the processor 61. The I/O units 62 may be used for communicating with one or more other network elements, entities, terminals or the like. The I/O units 62 may be a combined unit comprising communication equipment towards several network elements, or may comprise a distributed structure with a plurality of different interfaces for different network elements. The apparatus 60 further comprises at least one memory 63 usable, for example, for storing data and programs to be executed by the processor 61 and/or as a working storage of the processor 61.

The processor 61 is configured to execute processing related to the above-described aspects.

In particular, the apparatus 60 may be implemented in or may be part of a management entity, like a Sandbox Orchestration Function(ality), SOF, or the like, of a communication network, the management entity having an interface to at least one cognitive function module, and may be configured to perform processing as described in connection with Fig. 5.

Further, the present invention may be implemented by an apparatus comprising means for performing the above-described processing.

For further details regarding the functions of the apparatus, reference is made to the description of the method according to some example versions of the present invention as described in connection with Fig. 5.

In the foregoing exemplary description of the apparatus, only the units/means that are relevant for understanding the principles of the invention have been described using functional blocks. The apparatus may comprise further units/means that are necessary for its respective operation, respectively. However, a description of these units/means is omitted in this specification. The arrangement of the functional blocks of the apparatus is not to be construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is to be construed to be equivalent to an expression such as "means for").

For the purpose of the present invention as described herein above, it should be noted that
- method steps likely to be implemented as software code portions and being run using a processor at an apparatus (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the aspects/embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the aspects/embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Fieldprogrammable Gate Arrays) components, CPLD (Complex Programmable Logic Device) components, APU (Accelerated Processor Unit), GPU (Graphics Processor Unit) or DSP (Digital Signal Processor) components;
- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described embodiments can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is to be noted that the aspects/embodiments and general and specific examples described above are provided for illustrative purposes only and are in no way intended that the present invention is restricted thereto. Rather, it is the intention that all variations and modifications which fall within the scope of the appended claims are covered.

Embodiments of the invention are described for NR/5G networks. However, the invention is not restricted to NR/5G networks and may be employed in other 3GPP networks such as 3G networks, 4G networks, and upcoming 3GPP releases, too. The invention may be employed in non-3GPP networks provided they comprise a corresponding function.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. It is to be understood that what is described above is what is presently considered the preferred embodiments of the present invention. However, it should be noted that the scope of the invention is defined by the appended claims.

## Claims

1. A method for use in a management entity of a communication network, the management entity having an interface to at least one cognitive function module, the method comprising:
obtaining, at the management entity, information about a trust level of the at least one cognitive function module,
determining whether the trust level of the at least one cognitive function module fulfills a predetermined trust level, and
if it is determined that the predetermined trust level is fulfilled,
allowing an the- action of the at least one cognitive function module to be executed on the communication network under specific conditions.

2. The method according to claim 1, further comprising
selecting, if it is determined that the predetermined trust level is not fulfilled, a sandbox on which the action of the at least one cognitive function module is to be executed, and
executing the action of the at least one cognitive function module on the selected sandbox.

3. The method according to claim 1 or 2, further comprising:
obtaining performance information regarding the execution of the action of the at least one cognitive function module on the network under specific conditions or on the sandbox, and
updating the trust level of the at least one cognitive function module based on the obtained information.

4. The method according to any one of claims 1 to 3, wherein
executing the action of the at least one cognitive function module on the communication network under specific conditions means one or more of the following:
- executing only within certain hours;
- executing only on cells of the communication network with a particular kind of load;
- executing only on cells in a particular area; and
- executing in limited subscribed groups.

5. The method according to any one of claims 2 to 4, wherein the selecting the sandbox comprises selecting the sandbox based on a type and an instance of the sandbox depending on a need of the action to be executed and available sandbox resources.

6. An apparatus for use in a management entity of a communication network, the management entity having an interface to at least one cognitive function module, the apparatus comprising:
means for obtaining, at the management entity, information about a trust level of the at least one cognitive function module,
means for determining whether the trust level of the at least one cognitive function module fulfills a predetermined trust level, and
means for allowing, if it is determined that the predetermined trust level is fulfilled, an
action of the at least one cognitive function module to be executed on the communication network under specific conditions.

7. The apparatus according to claim 6 further comprising:
means for selecting, if it is determined that the predetermined trust level is not fulfilled, a sandbox on which the action of the at least one cognitive function module is to be executed, and
means for executing the action of the at least one cognitive function module on the selected sandbox.

8. The apparatus according to claim 6 or 7, further comprising:
means for obtaining performance information regarding the execution of the action of the at least one cognitive function module on the network under specific conditions or on the sandbox, and
means for updating the trust level of the at least one cognitive function module based on the obtained information.

9. The apparatus according to any one of claims 6 to 8, wherein
executing the action of the at least one cognitive function module on the communication network under specific conditions means one or more of the following:
- executing only within certain hours;
- executing only on cells of the communication network with a particular kind of load;
- executing only on cells in a particular area; and
- executing in limited subscribed groups.

10. The apparatus according to any one of claims 7 to 9, wherein the means for selecting the sandbox are further configured to select the sandbox based on a type and an instance of the sandbox depending on a need of the action to be executed and available sandbox resources.

11. A computer program comprising instructions which, when the program is executed by a computer, causes the computer to perform a method according to any one of claims 1 to 5.

12. A computer readable medium storing a computer program according to claim 11.

## Patentansprüche

1. Verfahren zur Verwendung in einer Verwaltungseinheit eines Kommunikationsnetzwerks, wobei die Verwaltungseinheit eine Schnittstelle zu mindestens einem kognitiven Funktionsmodul aufweist, wobei das Verfahren umfasst:
Erhalten von Informationen über eine Vertrauensstufe des mindestens einen kognitiven Funktionsmoduls bei der Verwaltungseinheit,
Ermitteln, ob die Vertrauensstufe des mindestens einen kognitiven Funktionsmoduls eine vorbestimmte Vertrauensstufe erfüllt, und
wenn ermittelt wird, dass die vorgegebene Vertrauensstufe erfüllt ist,
Ermöglichen, dass eine Aktion des mindestens einen kognitiven Funktionsmoduls unter bestimmten Bedingungen in dem Kommunikationsnetzwerk ausgeführt wird.

2. Verfahren nach Anspruch 1, das ferner umfasst:
Auswählen einer Sandbox, in der die Aktion des mindestens einen kognitiven Funktionsmoduls ausgeführt werden soll, wenn ermittelt wird, dass die vorbestimmte Vertrauensstufe nicht erfüllt ist, und
Ausführen der Aktion des mindestens einen kognitiven Funktionsmoduls in der ausgewählten Sandbox.

3. Verfahren nach Anspruch 1 oder 2, das ferner umfasst:
Erhalten von Leistungsinformationen über die Ausführung der Aktion des mindestens einen kognitiven Funktionsmoduls in dem Netzwerk unter bestimmten Bedingungen oder in der Sandbox, und
Aktualisieren der Vertrauensstufe des mindestens einen kognitiven Funktionsmoduls auf der Grundlage der erhaltenen Informationen.

4. Verfahren nach einem der Ansprüche 1 bis 3, wobei Ausführen der Aktion des mindestens einen kognitiven Funktionsmoduls in dem Kommunikationsnetzwerk unter bestimmten Bedingungen eines oder mehrere der folgenden bedeutet:
- Ausführen nur innerhalb bestimmter Stunden;
- Ausführen nur in Zellen des Kommunikationsnetzes mit einer bestimmten Art von Last;
- Ausführen nur in Zellen in einem bestimmten Bereich; und
- Ausführen in begrenzten abonnierten Gruppen.

5. Verfahren nach einem der Ansprüche 2 bis 4, wobei das Auswählen der Sandbox das Auswählen der Sandbox auf der Grundlage eines Typs und einer Instanz der Sandbox in Abhängigkeit von einer Notwendigkeit der auszuführenden Aktion und der verfügbaren Sandbox-Ressourcen umfasst.

6. Vorrichtung zur Verwendung in einer Verwaltungseinheit eines Kommunikationsnetzwerks, wobei die Verwaltungseinheit eine Schnittstelle zu mindestens einem kognitiven Funktionsmodul aufweist, wobei die Vorrichtung umfasst:
Mittel zum Erhalten von Informationen über eine Vertrauensstufe des mindestens einen kognitiven Funktionsmoduls bei der Verwaltungseinheit,
Mittel zum Ermitteln, ob die Vertrauensstufe des mindestens einen kognitiven Funktionsmoduls eine vorbestimmte Vertrauensstufe erfüllt, und
Mittel zum Ermöglichen, dass eine Aktion des mindestens einen kognitiven Funktionsmoduls unter bestimmten Bedingungen in dem Kommunikationsnetzwerk ausgeführt wird, wenn ermittelt wird, dass die vorgegebene Vertrauensstufe erfüllt ist.

7. Vorrichtung nach Anspruch 6,die ferner umfasst:
Mittel zum Auswählen einer Sandbox, in der die Aktion des mindestens einen kognitiven Funktionsmoduls ausgeführt werden soll, wenn ermittelt wird, dass die vorbestimmte Vertrauensstufe nicht erfüllt ist, und
Mittel zum Ausführen der Aktion des mindestens einen kognitiven Funktionsmoduls in der ausgewählten Sandbox.

8. Vorrichtung nach Anspruch 6 oder 7, die ferner umfasst:
Mittel zum Erhalten von Leistungsinformationen über die Ausführung der Aktion des mindestens einen kognitiven Funktionsmoduls in dem Netzwerk unter bestimmten Bedingungen oder in der Sandbox, und
Mittel zum Aktualisieren der Vertrauensstufe des mindestens einen kognitiven Funktionsmoduls auf der Grundlage der erhaltenen Informationen.

9. Vorrichtung nach einem der Ansprüche 6 bis 8, wobei Ausführen der Aktion des mindestens einen kognitiven Funktionsmoduls in dem Kommunikationsnetzwerk unter bestimmten Bedingungen eines oder mehrere der folgenden bedeutet:
- Ausführen nur innerhalb bestimmter Stunden;
- Ausführen nur in Zellen des Kommunikationsnetzes mit einer bestimmten Art von Last;
- Ausführen nur in Zellen in einem bestimmten Bereich; und
- Ausführen in begrenzten abonnierten Gruppen.

10. Vorrichtung nach einem der Ansprüche 7 bis 9, wobei die Mittel zum Auswählen der Sandbox ferner konfiguriert sind zum Auswählen der Sandbox auf der Grundlage eines Typs und einer Instanz der Sandbox in Abhängigkeit von einer Notwendigkeit der auszuführenden Aktion und der verfügbaren Sandbox-Ressourcen.

11. Computerprogramm, das Befehle umfasst, die bei Ausführung des Programms durch einen Computer den Computer veranlassen, das Verfahren nach einem der Ansprüche bis 1 bis 5 durchzuführen.

12. Computerlesbares Medium, das ein Computerprogramm nach Anspruch 11 speichert.

## Revendications

1. Procédé destiné à être utilisé dans une entité de gestion d'un réseau de communication, l'entité de gestion présentant une interface avec au moins un module de fonction cognitive, le procédé comprenant :
l'obtention, au niveau de l'entité de gestion, d'une information sur un niveau de fiabilité du au moins un module de fonction cognitive,
le fait de déterminer si le niveau de fiabilité du au moins un module de fonction cognitive satisfait un niveau de fiabilité prédéterminé, et
s'il est déterminé que le niveau de fiabilité prédéterminé est satisfait, le fait de permettre à une action du au moins un module de fonction cognitive d'être exécutée sur le réseau de communication dans des conditions spécifiques.

2. Procédé selon la revendication 1, comprenant en outre :
la sélection, s'il est déterminé que le niveau de fiabilité prédéterminé n'est pas satisfait, d'un bac à sable sur lequel l'action du au moins un module de fonction cognitive doit être exécutée, et
l'exécution de l'action du au moins un module de fonction cognitive sur le bac à sable sélectionné.

3. Procédé selon la revendication 1 ou 2, comprenant en outre :
l'obtention d'une information de performance concernant l'exécution de l'action du au moins un module de fonction cognitive sur le réseau dans des conditions spécifiques ou sur le bac à sable, et
l'actualisation du niveau de fiabilité du au moins un module de fonction cognitive sur la base de l'information obtenue.

4. Procédé selon l'une quelconque des revendications 1 à 3, dans lequel
l'exécution de l'action du au moins un module de fonction cognitive sur le réseau de communication dans des conditions spécifiques signifie un ou plusieurs parmi ce qui suit :
- l'exécution uniquement pendant certaines heures;
- l'exécution uniquement sur des cellules du réseau de communication avec une sorte de charge particulière;
- l'exécution uniquement sur des cellules dans une zone particulière; et
- l'exécution dans des groupes d'abonnés limités.

5. Procédé selon l'une quelconque des revendications 2 à 4, dans lequel la sélection du bac à sable comprend la sélection du bac à sable sur la base d'un type et d'une instance du bac à sable en fonction d'un besoin de l'action à exécuter et de ressources de bac à sable disponibles.

6. Appareil destiné à être utilisé dans une entité de gestion d'un réseau de communication, l'entité de gestion présentant une interface avec au moins un module de fonction cognitive, l'appareil comprenant :
des moyens pour obtenir, au niveau de l'entité de gestion, une information sur un niveau de fiabilité du au moins un module de fonction cognitive,
des moyens pour déterminer si le niveau de fiabilité du au moins un module de fonction cognitive satisfait un niveau de fiabilité prédéterminé, et
des moyens pour permettre, s'il est déterminé que le niveau de fiabilité prédéterminé est satisfait, à une action du au moins un module de fonction cognitive d'être exécutée sur le réseau de communication dans des conditions spécifiques.

7. Appareil selon la revendication 6, comprenant en outre :
des moyens pour sélectionner, s'il est déterminé que le niveau de fiabilité prédéterminé n'est pas satisfait, un bac à sable sur lequel l'action du au moins un module de fonction cognitive doit être exécutée, et
des moyens pour exécuter l'action du au moins un module de fonction cognitive sur le bac à sable sélectionné.

8. Appareil selon la revendication 6 ou 7, comprenant en outre :
des moyens pour obtenir une information de performance concernant l'exécution de l'action du au moins un module de fonction cognitive sur le réseau dans des conditions spécifiques ou sur le bac à sable, et
des moyens pour actualiser le niveau de fiabilité du au moins un module de fonction cognitive sur la base de l'information obtenue.

9. Appareil selon l'une quelconque des revendications 6 à 8, dans lequel
l'exécution de l'action du au moins un module de fonction cognitive sur le réseau de communication dans des conditions spécifiques signifie un ou plusieurs parmi ce qui suit :
- l'exécution uniquement pendant certaines heures;
- l'exécution uniquement sur des cellules du réseau de communication avec une sorte de charge particulière;
- l'exécution uniquement sur des cellules dans une zone particulière; et
- l'exécution dans des groupes d'abonnés limités.

10. Appareil selon l'une quelconque des revendications 7 à 9, dans lequel les moyens pour sélectionner le bac à sable sont en outre configurés pour sélectionner le bac à sable sur la base d'un type et d'une instance du bac à sable en fonction d'un besoin de l'action à exécuter et de ressources de bac à sable disponibles.

11. Programme d'ordinateur comprenant des instructions qui, lorsque le programme est exécuté par un ordinateur, amène l'ordinateur à réaliser un procédé selon l'une quelconque des revendications 1 à 5.

12. Support lisible par ordinateur stockant un programme d'ordinateur selon la revendication 11.
